# EUROPÄISCHE PATENTSCHRIFT

(11) **EP 3 279 686 B1**
(45) Veröffentlichungstag und Bekanntmachung des Hinweises auf die Patenterteilung: **06.02.2019**
(21) Anmeldenummer: 17182537.5
(22) Anmeldetag: 21.07.2017
(51) Int. Cl.: G01S 13/44, G06K 7/10, G01S 13/74

(54) **RFID-VORRICHTUNG ZUM KOMMUNIZIEREN MIT RFID-TRANSPONDERN UND VERFAHREN ZUM ZUORDNEN VON RFID-TRANSPONDERN**
RADIO FREQUENCY IDENTIFICATION DEVICE FOR COMMUNICATING WITH RFID TRANSPONDERS AND METHOD FOR ALLOCATING RFID TRANSPONDERS
DISPOSITIF RFID PERMETTANT DE COMMUNIQUER AVEC DES TRANSPONDEURS RFID ET PROCÉDÉ D'ATTRIBUTION DE TRANSPONDEURS RFID

(30) Priorität: 03.08.2016 DE 102016114316
(43) Veröffentlichungstag der Anmeldung: 07.02.2018
(73) Patentinhaber: Sick AG, 79183 Waldkirch (DE)
(72) Erfinder: Wilhoeft, Volker, 22391 Hamburg (DE)

(56) Entgegenhaltungen:
- WO-A1-2016/109229
- DE-A1-102005 037 583
- US-A1- 2006 058 913
- US-A1- 2009 207 024
- US-A1- 2010 271 210

## Beschreibung

Die Erfindung betrifft eine RFID-Vorrichtung zum Kommunizieren mit RFID-Transpondern und ein Verfahren zum Zuordnen von RFID-Transpondern nach dem Oberbegriff von Anspruch 1 beziehungsweise 11.

RFID-Systeme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung, Lagerung und Sortierung von Gütern und Produkten zu steuern.

Die RFID-Transponder werden durch elektromagnetische Strahlung des Schreib-Lesesystems zur Abstrahlung der gespeicherten Information angeregt, wobei passive Transponder die notwendige Energie aus der Sendeenergie des Lesesystems beziehen und die weniger üblichen aktiven Transponder dafür eine eigene Versorgung besitzen. In dem etablierten Ultrahochfrequenzstandard EPC Generation-2 UHF RFID, dessen Luftschnittstelle in ISO180000-6 definiert ist, werden passive Transponder nach dem Backscatter-Verfahren ausgelesen.

In vielen Lagern oder Logistikzentren werden die Waren nicht einzeln, sondern mit Hilfe von Transportbehältern wie Kunststoffwannen oder Paletten befördert. Dann ist es vorteilhaft, wenn sowohl die Waren als auch die Transportbehälter selber mit RFID-Transpondern versehen sind. Ein RFID-System kann alle Transponder auslesen, die sich in seinem Erfassungsbereich befinden, auch durch nichtleitendes Material der Transportbehälter oder Objekte hindurch. Damit lassen sich nun Aufgabenstellungen lösen wie die Zusammenstellung einer Warenlieferung aus einzelnen Waren sowie deren Überprüfung auf Vollständigkeit, oder es befinden sich Waren auf einer Palette, die nun konkret dieser Palette zugeordnet werden sollen.

Eine Zuordnung mehrerer Transponder zueinander ist bislang nur möglich, wenn sich tatsächlich nur die entsprechenden Transponder im Erfassungsbereich einer RFID-Vorrichtung befinden. Eine herkömmliche Lösung ist die Vereinzelung der Waren, etwa in einem RFID-Lesetunnel mit einem Förderband, auf dem Behälter vereinzelt gefördert werden. Es befindet sich dann immer nur ein einzelner Behälter im Erfassungsbereich. Sobald sich beispielsweise durch Überreichweite der RFID-Vorrichtung weitere Waren oder Transportbehälter mit RFID-Transpondern im Erfassungsbereich befinden, kann es zu Fehlzuordnungen kommen. Es gibt algorithmische Ansätze wie ein SAR-Verfahren (Successive Approximation Register), die aber aufwändig und nicht etabliert sind.

Die DE 10 2010 020 531 A1 offenbart eine RFID-Lesevorrichtung zur Montage an einem Förderer oder einem Leseportal mit einer Antenne, deren Empfangsbereich mit der Bewegung der Transponder mitschwenkt. Anhand der Empfangsintensität wird dann entschieden, ob sich ein Transponder auf dem Förderer oder durch das Leseportal bewegt. Diese RFID-Lesevorrichtung ist wegen der mitschwenkenden Antenne relativ träge und nur für Sonderanwendungen mit im Voraus bekannten Wegen der Transponder nutzbar. Für eine konkrete Zuordnung zu einem Objekt verlässt sich auch die DE 10 2010 020 531 A1 auf eine Vereinzelung der Objekte.

Aus der US 2010/0271210 A1 ist ein RFID-System bekannt, das sein Lesefeld anpasst. Dazu sind erste RFID-Tags in einem Bereich angeordnet, in dem gelesen werden soll, und zweite RFID-Tags dort, wo nicht mehr gelesen werden soll. In einer Einlernphase wird eine Ansteuerung der Antenne gesucht, in der exklusiv die ersten RFID-Tags erfasst werden. Dazu wird der Winkel über eine phasengesteuerten Antenne und die Reichweite über die Sendestärke eingestellt.

Die US 2006/0058913 A1 offenbart eine Lagerverwaltung auf Basis von RFID. Paletten, Behälter und Güter werden jeweils mit RFID-Transpondern versehen. Ein Transportfahrzeug greift eine Palette von beiden Seiten mit Armen, die RFID-Antennen aufweisen. Beim Auslesen der Transponder kann eine Mehrdeutigkeit entstehen, weil nicht nur das Paletten-Tag der gegriffenen Palette erfasst wird. Über eine Datenbank werden die RFID-Informationen zugeordnet und festgestellt, wie viele Behälter jede noch in Frage kommende Palette aufweist, wie viele Behälter-Tags gelesen werden konnten, und zu welcher gegriffenen Palette das am besten passt.

Es ist daher Aufgabe der Erfindung, eine zuverlässigere Zuordnung von Transpondern zu ermöglichen.

Diese Aufgabe wird durch eine RFID-Vorrichtung zum Kommunizieren mit RFID-Transpondern und ein Verfahren zum Zuordnen von RFID-Transpondern nach Anspruch 1 beziehungsweise 11 gelöst. Die RFID-Vorrichtung wird auch als Interrogator, RFID-Leser oder RFID-Schreib-Lesevorrichtung bezeichnet, denn üblicherweise ist eine RFID-Vorrichtung auch zum Schreiben in der Lage. Die RFID-Vorrichtung ist bevorzugt für den UHF-Bereich nach ISO180000-6 ausgebildet. Zusätzlich zu der eigentlichen Kommunikation mit einem RFID-Transponder etwa durch Lese- und Schreibbefehle gemäß einem RFID-Protokoll wie ISO180000-6 ist die RFID-Vorrichtung auch in der Lage, eine Orts- beziehungsweise Geschwindigkeitsgröße des RFID-Transponders aus dem RFID-Signal zu bestimmen.

Die Erfindung geht nun von dem Grundgedanken aus, Lage- oder Bewegungsinformationen von Behälter-Transpondern und Objekt-Transpondern für eine Zuordnung auszunutzen. Dabei ist ein Behälter-Transponder an einem Behälter, wie einer Kiste, einer Palette oder auch einem AGV (Automated Guided Vehicle), einem Gabelstapler oder einem sonstigen Transportmittel angeordnet und ein Objekt-Transponder an einem Objekt, das sich in diesem Behälter befinden kann. Behälter-Transponder wie Objekt-Transponder sind RFID-Transponder gemäß dem RFID-Protokoll. Sie können untereinander an sich völlig gleichartig sein und sich nur darin unterscheiden, ob sie an Behälter oder Objekt angeordnet sind. Vorzugsweise ist auf dem jeweiligen Transponder eine Information abgespeichert, aus der sich ableiten lässt, ob es sich um einen Behälter- oder Objekt-Transponder handelt. Das Ziel der Zuordnung ist festzustellen, welche durch Objekt-Transponder gekennzeichneten Objekte sich an beziehungsweise in dem durch Behälter-Transponder gekennzeichneten Behälter befinden. Diese Zuordnung kann lediglich ein Objekt einem Behälter zuordnen, allgemein ist es eine Zuordnung von m Objekten auf n Behälter.

Die Erfindung hat den Vorteil, dass eine zuverlässige m-zu-n-Zuordnung auch für zahlreiche Transponder im Erfassungsbereich der RFIF-Lesevorrichtung möglich ist. Konkrete Kriterien für die Zuordnung können in der Anwendung gewählt werden. Eine Vereinzelung von Objekten oder Behältern ist nicht mehr erforderlich. Dadurch kann der Durchsatz von Logistikanlagen durch eine engere Taktung der Behälter erhöht werden, und es ergibt sich ein Kostenvorteil, weil Vereinzelungsanlagen entfallen. Außerdem können Fehlerzustände erkannt werden, beispielsweise ein ruhender Transponder. Die Orts- und Geschwindigkeitsgrößen sind auch nützlich, um eine Bewegungsrichtung zu erkennen, etwa ob sich der Transponder in ein Lager hinein oder aus einem Lager heraus bewegt, oder um Mehrfachzählungen zu vermeiden.

Die Steuerungseinheit ist bevorzugt dafür ausgebildet, als Ortsgröße den Winkel zu bestimmen, in dem ein RFID-Transponder erfasst wird. Dieser Winkel, welcher der Erfassungsrichtung entspricht (DoA, Direction of Arrival), enthält schon wesentliche Informationen über die Position von Transpondern und lässt sich durch die RFID-Vorrichtung zuverlässig bestimmen. Eine Möglichkeit ist ein Phasenverfahren mit mehr als einer Antenne. Die Winkelinformation kann außerdem mit Vorwissen verknüpft werden, beispielsweise dass Transponder sich auf einem Förderer oder einer bestimmen Fahrbahn bewegen, so dass die Positionsinformation vervollständigt wird.

Die Steuerungseinheit ist bevorzugt dafür ausgebildet, als Ortsgröße den Abstand zu bestimmen, in dem ein RFID-Transponder erfasst wird. Eine Möglichkeit, dies zu messen, ist der Pegel (RSSI, Received Signal Strength Indicator) des RFID-Signals. Allerdings variiert der RSSI auch mit der Orientierung des Transponders und mit dem Material zwischen Transponder und RFID-Vorrichtung. Insbesondere in Kombination mit der Bestimmung des Winkels ergeben sich aber doch abgrenzbare Ortsinformationen. Auch ein Phasenverfahren kann den Abstand messen, allerdings noch mehrdeutig bezüglich der Wellenlänge der Trägerfrequenz, wobei diese Mehrdeutigkeit wiederum durch Verwendung zweier Frequenzen auflösbar wäre.

Die Steuerungseinheit ist bevorzugt dafür ausgebildet, einem Behälter-Transponder als Mittelpunkt alle Objekt-Transponder in einem Höchstabstand zuzuordnen. Beispielsweise ist der Behälter-Transponder in der Mitte eines Behälters angeordnet, und der Höchstabstand entspricht den halben Behälterabmessungen. Es sind auch unterschiedliche Höchstabstände in Breiten-, Längen- und/oder Höhenrichtung denkbar. Dann ist es vorteilhaft, wenn Informationen über die Orientierung der Behälter vorliegen, beispielsweise weil Kisten immer in bestimmter Weise gestapelt sind oder auf einem Förderband liegen, oder weil die Fahrtrichtung eines Fahrzeugs ermittelt werden kann. So lässt sich auch eine typische Quaderform oder eine andere geometrische Form des Behälters berücksichtigen.

Die Steuerungseinheit ist bevorzugt dafür ausgebildet, einem Behälter-Transponder alle Objekt-Transponder mit ähnlicher Geschwindigkeit zuzuordnen. Eine Geschwindigkeitsgröße lässt sich als Differenz zweier Ortsgrößen und dem Zeitintervall zwischen deren Bestimmung, aber auch direkt beispielsweise durch den Dopplereffekt erfassen. Eine zusammengehörige Gruppe von Transpondern sollte sich bis auf Toleranzen mit gleicher Geschwindigkeit bewegen. Der Nutzen einer Geschwindigkeitsbestimmung kann sich von Anwendung zu Anwendung stark unterscheiden. Transponder auf individuell bewegten Transportfahrzeugen bilden deutliche Geschwindigkeitscluster, bei Objekten auf einem Förderer dagegen fehlt praktisch jegliche Trennschärfe. Es kann zusätzlich geprüft werden, ob die Transponder mit untereinander ähnlicher Geschwindigkeit nahe beieinander liegen. Ab einem gewissen Höchstabstand ist eine gleiche Geschwindigkeit eher zufällig, vor allem wenn es zwischen zwei Transpondern ähnlicher Geschwindigkeit noch weitere Transponder mit anderer Geschwindigkeit gibt.

Wie bei einem ortsbasierten Zuordnungskriterium kann auch die Geschwindigkeit in ein, zwei oder drei Achsen verglichen werden.

Die Steuerungseinheit ist bevorzugt dafür ausgebildet, eine äußere Grenze anhand mindestens zweier Behälter-Transponder zu ziehen und den Behälter-Transpondern alle dazwischen angeordneten Objekt-Transponder zuzuordnen. Dabei muss nicht zwingend die Position des Behälter-Transponders selbst den Grenzpunkt definieren, sondern es kann noch einen Versatz geben. Ein Beispiel für dieses Zuordnungskriterium ist je ein Behälter-Transponder vorne und hinten an einer Kiste. Mit weiteren Behälter-Transpondern können aufwändigere auch zwei- oder dreidimensionale Grenzlinien gezogen werden. Vorzugsweise wird dieses Zuordnungskriterium auch mit anderen kombiniert. In dem Beispiel gehören dann alle Objekt-Transponder zu dem Behälter, die sich zwischen den vorne und hinten an der Kiste befestigten Behälter-Transpondern befinden und zusätzlich in Tiefen- und Höhenrichtung innerhalb eines jeweiligen Höchstabstands bleiben, beziehungsweise die sich zusätzlich untereinander und bezüglich der Behälter-Transponder mit nahezu gleicher Geschwindigkeit bewegen.

Die Steuerungseinheit ist bevorzugt dafür ausgebildet, Behälter-Transponder untereinander durch Vergleich von Orts- und/oder Geschwindigkeitsgrößen zuzuordnen. Es werden also nicht nur Objekt-Transponder den Behälter-Transpondern zugeordnet. Zusätzlich werden auch die Behälter-Transponder nach den analogen Kriterien einander zugeordnet, um herauszufinden, ob sie den gleichen Behälter identifizieren. Oft wird es einfacher und zuverlässiger sein, diese Zugehörigkeit zueinander und zu einem Behälter auf den Behälter-Transponder zu schreiben. Im Gegensatz zu den Objekt-Transpondern, die üblicherweise den Behälter wechseln und dadurch voneinander getrennt werden, bleiben Behälter-Transponder desselben Behälters bestimmungsgemäß zumindest für längere Zeit beieinander, so dass eine Initialisierung mit derartiger Zugehörigkeitsinformation möglich und sinnvoll ist. Es ist auch denkbar, die Behälter-Transponder einander anhand von Orts- und Geschwindigkeitsgrößen zuzuordnen, obwohl die Zugehörigkeit durch deren RFID-Information schon bekannt ist. Dadurch erhält man nämlich Hinweise, wie sich in der konkreten Messsituation die Orts- und Geschwindigkeitsgrößen von zusammengehörigen Transpondern verhalten, und kann dies bei der Zuordnung von Objekt-Transpondern berücksichtigen, beispielsweise um eine Zuordnung zu prüfen oder um Toleranzen einzustellen.

Die Steuerungseinheit ist bevorzugt dafür ausgebildet, Orts- und/oder Geschwindigkeitsgrößen zu mindestens zwei Zeitpunkten zu bestimmen und die Zuordnung darauf zu stützen. Die Zuordnung basiert dann nicht auf einer einzigen Momentaufnahme, sondern mindestens noch einer Wiederholung. Eine besonders stabile Zuordnung wird durch zahlreiche Wiederholungen und entsprechende optimierende Clusteralgorithmen auf zeitabhängigen Orts- und/oder Geschwindigkeitsinformationen gewonnen, wie sie beispielsweise aus der 3D-Navigation oder der Objektverfolgung (Tracking) bekannt sind. Aus einer wiederholten Ortsbestimmung kann auch die Geschwindigkeit sehr genau bestimmt und neben den Trajektorien als Clusterkriterium herangezogen werden.

Die Steuerungseinheit ist bevorzugt dafür ausgebildet, eine Zwangsführung der RFID-Transponder bei der Bestimmung der Orts- und/oder Geschwindigkeitsgrößen und bei der Zuordnung zu berücksichtigen. Beispiele einer Zwangsführung sind ein Förderband oder eine festgelegte Fahrbahn für Behälter-Transponder tragende Fahrzeuge. Die Bestimmung von Orts- und Geschwindigkeitsgrößen sowie die darauf basierende Zuordnung kann sich dann auf die Freiheitsgrade beschränken, welche die Zwangsführung noch lässt.

Die Steuerungseinheit ist bevorzugt dafür ausgebildet zu erkennen, wenn bei einer wiederholten Zuordnung von Objekt-Transponder zu Behälter-Transponder eine veränderte Zuordnung eintritt. Beispielsweise wird ein Objekt-Transponder nun einem anderen Behälter-Transponder zugeordnet, ist nicht mehr zuordenbar oder gar nicht mehr auffindbar. Das deutet auf einen Fehlerzustand hin. Entweder ist der Zuordnung ein Fehler unterlaufen, oder es ist tatsächlich in der physischen Welt ein Objekt heruntergefallen oder wurde in nicht vorhergesehener Weise aus seinem Behälter herausgenommen. Bevor Fehlermaßnahmen ergriffen werden, sollte die neue Zuordnung vorzugsweise automatisch mit beabsichtigten Maßnahmen der betreffenden Anlage abgeglichen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung einer RFID-Vorrichtung mit einem RFID-Transponder in deren Lesefeld;
- Fig. 2: ein Beispiel einer Zuordnung von Objekt-Transpondern zu einem Behälter-Transponder, der sich in der Mitte einer Kiste befindet;
- Fig. 3: ein Beispiel einer Zuordnung von Objekt-Transpondern zu Behälter-Transpondern, die das vordere und hintere Ende einer Kiste markieren; und
- Fig. 4: ein Beispiel einer Zuordnung von Objekt-Transpondern zu Behälter-Transpondern aufgrund des Lesewinkels.

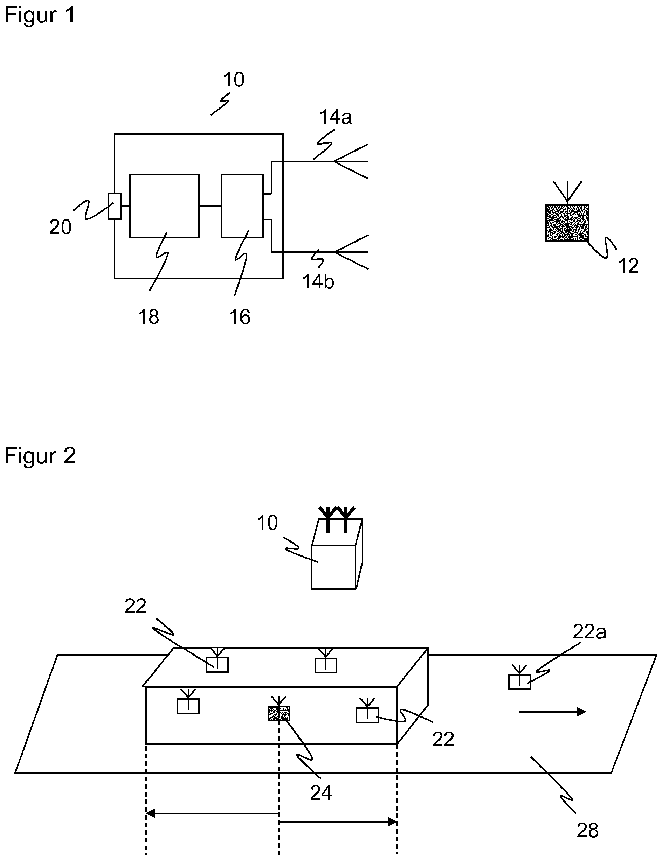

Figur 1 zeigt eine schematische Überblicksdarstellung einer RFID-Vorrichtung 10 und eines beispielhaft in deren Lesereichweite angeordneten RFID-Transponders 12. Die RFID-Vorrichtung 10 weist in dieser Ausführungsform zwei Antennen 14a-b auf, um über Phasenmessungen der einlaufenden Wellen eine Ortung der RFID-Transponder 12 vornehmen zu können. In alternativen Ausführungsformen gibt es nur eine Antenne oder umgekehrt noch weitere Antennen.

Mit Hilfe eines Transceivers 16 sendet und empfängt die RFID-Vorrichtung 10 über die Antennen 14a-b RFID-Signale. Eine Steuerungseinheit 18, beispielsweise mit einem Digitalbaustein wie einem Mikroprozessor oder einem FPGA (Field Programmable Gate Array), steuert die Abläufe in der RFID-Vorrichtung 10 und ist in der Lage, RFID-Informationen in ein RFID-Signal zu codieren beziehungsweise eine RFID-Information aus einem RFID-Signal auszulesen. Ein drahtgebundener oder drahtloser Anschluss 20 dient dazu, die RFID-Vorrichtung 10 in ein übergeordnetes System einzubinden.

Die Kommunikation erfolgt vorzugsweise gemäß einem bekannten RFID-Protokoll, insbesondere ISO 18000-6 oder EPC Generation-2 UHF RFID, und die dafür erforderlichen Schritte und Komponenten sind an sich bekannt und werden ebenso wie der über die groben Funktionsblöcke der Figur 1 hinausgehende genaue Aufbau der RFID-Vorrichtung 10 als bekannt vorausgesetzt.

Die RFID-Vorrichtung 10 ist in der Lage, zusätzlich zur Erfassung und gegebenenfalls Veränderung der auf dem RFID-Transponder 12 abgelegten eigentlichen RFID-Informationen, wie beispielsweise dessen Kennung, auch Orts- oder Geschwindigkeitsinformationen des RFID-Transponders 12 zu erfassen. Dazu werden Eigenschaften der Trägerwelle selbst ausgewertet, also das RFID-Signal, und nicht die auf dem RFID-Transponder 12 gespeicherten und in das RFID-Signal codierten RFID-Informationen.

In der Ausführungsform der Figur 1 wird die unterschiedliche Phase an den beiden Antennen 14a-b ausgewertet. Darüber kann zunächst der Winkel bestimmt werden, unter dem der RFID-Transponder 12 gelesen wurde, und so zumindest winkelmäßig eine räumliche Zuordnung der Tags vorgenommen werden. Es ist auch denkbar, aus der Phaseninformation den Abstand des RFID-Transponders 12 zu bestimmen. Das bleibt mehrdeutig modulo λ, der Trägerwellenlänge, kann aber dennoch nützliche Informationen liefern. Außerdem lässt sich der Eindeutigkeitsbereich auch erweitern, beispielsweise durch Messung mit zwei Frequenzen. Weitere Möglichkeiten, eine Orts- oder Geschwindigkeitsinformation zu erfassen, sind Auswertungen des Pegels (RSSI) oder Messungen des Dopplereffekts. Die Erfassung von Orts- oder Geschwindigkeitsinformationen durch eine RFID-Vorrichtung 10 ist an sich bekannt und wird deshalb nicht genauer beschrieben, die erfindungsgemäße RFID-Vorrichtung 10 nutzt solche Informationen lediglich aus.

Es ist außerdem denkbar, zusätzliche Orts- beziehungsweise Geschwindigkeitsinformationen durch weitere Sensoren wie eine Kamera oder einen Laserscanner zu gewinnen, sie als Parameter zu erhalten, wie die Fördergeschwindigkeit eines Förderbandes, auf dem sich RFID-Transponder 12 befinden, oder solche Informationen von einem anderen System zu erhalten, wie der Steuerung eines RFID-Transponder 12 befördernden Fahrzeugs oder sonstigen Transportmittels.

Die Orts- und Geschwindigkeitsinformationen werden nun von der Steuerungseinheit 18 genutzt, um RFID-Transponder 12 einander zuzuordnen. Dabei kann die Steuerungseinheit 18 auch ganz oder teilweise außerhalb der RFID-Vorrichtung 10 implementiert sein. Dies wird unter Bezugnahme auf die Figuren 2 bis 4 an mehreren Beispielen verdeutlicht.

Figur 2 zeigt ein Beispiel einer Zuordnung von Objekt-Transpondern 22 zu einem Behälter-Transponder 24. Die Objekt-Transponder 22 und Behälter-Transponder 24 sind jeweils RFID-Transponder, jedoch ist die Steuerungseinheit 18 anhand der Kennung oder einer sonstigen Information, die sie selbst hat oder per RFID ausliest, in der Lage, Behälter-Transponder 24 als solche zu erkennen. Der Behälter-Transponder 24 identifiziert einen Behälter 26 auf einem Förderband 28, in dem sich nicht selbst gezeigte Objekte mit Objekt-Transpondern 22 befinden. Das Förderband 28 ist nur ein Anwendungsbeispiel, es kann sich alternativ um beliebige passiv oder aktiv bewegte oder auch nicht bewegte Behälter handeln.

Die Zuordnungsaufgabe besteht nun darin, die Objekt-Transponder 22 in dem Behälter 26 dessen Behälter-Transponder 24 zuzuordnen. Ein Objekt-Transponder 22a außerhalb des Behälters 26, der sich ebenfalls in Lesereichweite befindet, soll dagegen nicht dem Behälter-Transponder 24 zugeordnet werden. Dazu ist hier der Behälter-Transponder 24 mittig in dem Behälter 26 angebracht. Außerdem ist der Steuerungseinheit 18 bekannt, gegebenenfalls durch Auslesen des Behälter-Transponders 24, wie lang der Behälter 26 in Förderrichtung ist. Alle Objekt-Transponder 22, die sich höchstens im Abstand der halben Behälterlänge zu dem Behälter-Transponder 24 befinden, werden nun als in dem Behälter 26 und damit dem Behälter-Transponder 24 zugehörig angesehen. Für diese Unterscheidung genügt es, den jeweiligen Lesewinkel zu kennen und anhand der Behälterabmessungen und des Lesewinkels des Behälter-Transponders 24 einen Winkelbereich für den Behälter 26 zu bestimmen. Andere oder genauere Ortsinformationen sind aber ebenso denkbar. Es ist auch denkbar, den Winkel in Höhenrichtung ganz analog anhand der Höhe des Behälters 26 zu prüfen. Ist auch die Position der Transponder 22, 24 in Tiefenrichtung bekannt, etwa durch Phasen- oder RSSI-Messung, so kann auch ganz entsprechend die Tiefe des Behälters 26 geprüft werden.

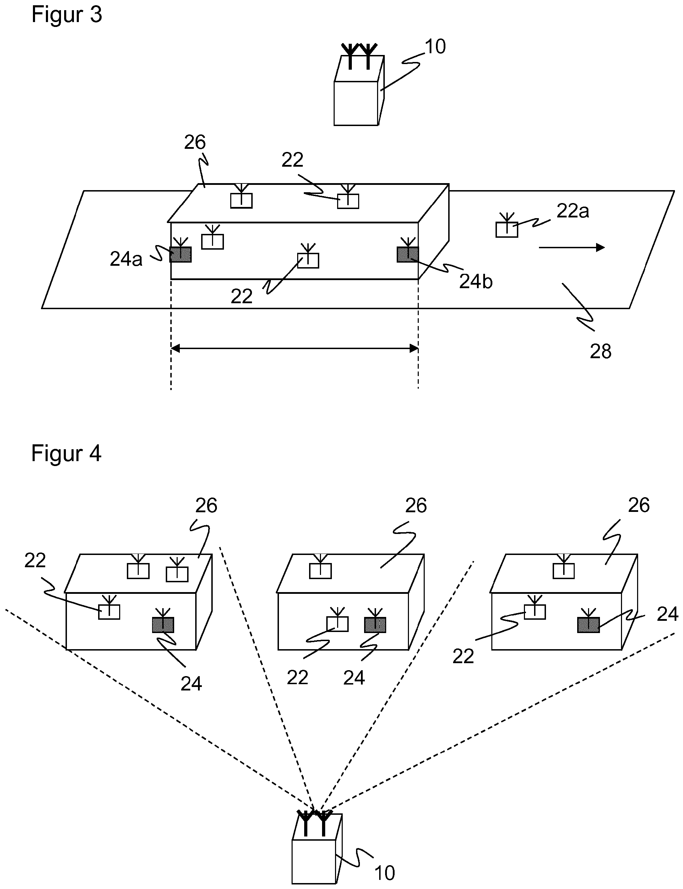

Figur 3 zeigt ein weiteres Beispiel einer Zuordnung von Objekt-Transpondern 22 zu einem Behälter-Transponder 24. Im Unterschied zu Figur 2 befinden sich hier zwei Behälter-Transponder 24a-b in Förderrichtung vorne und hinten an dem Behälter 26. Genau die Objekt-Transponder 22, die zwischen den Behälter-Transpondern 24a-b liegen, werden den Behälter-Transpondern 24a-b und damit dem Behälter 26 zugeordnet. Die übrigen Ausführungen zu Figur 2 gelten entsprechend. Es ist denkbar, weitere Behälter-Transponder vorzusehen, um die Grenzlinie, innerhalb derer die zuzuordnenden Objekt-Transponder 22 liegen, genauer und in weiteren Freiheitsgraden als nur der Förderrichtung zu definieren. Das ist vor allem dann nützlich, wenn sich der Behälter 26 nicht auf einem Förderband 28 befindet oder wenn es mehrere Förderbänder in relativ enger Nachbarschaft neben- beziehungsweise übereinander gibt.

Figur 4 zeigt noch ein weiteres Beispiel einer Zuordnung von Objekt-Transpondern 22 zu Behälter-Transpondern 24. Hierbei handelt es sich beispielsweise um Warenstapel auf Paletten. Es ist unmittelbar ersichtlich, dass eine Auftrennung und Zuordnung anhand des Lesewinkels auf die linke, mittlere und rechte Palette möglich ist. Wird der Lesewinkel auch in Höhenrichtung erfasst, so können Paletten auch gestapelt unterschieden werden.

Allgemein gilt, dass die Zuordnung umso komplexer sein kann, je besser die Orts- und Geschwindigkeitsinformationen sind. Bei einer 3D-Lokalisierung von Transpondern können beispielsweise auch hintereinander stehende Behälter korrekt verarbeitet werden, oder sogar Schachtelungen, in denen mehrere Transportbehälter voller Waren auf einer Palette stehen. In diesem Fall kann es dann eine Art übergeordnete Meta-Behälter-Transponder geben, und das Zuordnungsproblem wird ein I-zu-m-zu-n-Problem oder ein noch tiefer geschachteltes Problem, das aber mit entsprechend guten Orts- und Geschwindigkeitsinformationen ganz analog lösbar bleibt.

Die Zuordnung ermöglicht auch eine Fehlererkennung, wenn sie sich im Laufe der Zeit ändert. Beispielsweise ist ein Objekt mit einem Objekt-Transponder 22, der sich nicht konform mit seinem Behälter 26 bewegt, nicht mehr in dem Behälter 26 oder heruntergefallen.

Eine Bewegung der Behälter 26 und Objekte während der Erfassung ist nicht erforderlich. Sie hat aber Vorteile, weil eine Mehrfacherfassung und -zuordnung möglich wird. Neben statistischen Verbesserungen werden dadurch die Transponder 22, 24 aus verschiedenen Positionen betrachtet, so dass das Risiko eines nicht gelesenen Transponders 22, 24, der in einer momentanen Position nur schwach erreicht wird, deutlich sinkt. Weiterhin werden alle Transponder 22, 24 im zeitlichen Verlauf aus verschiedenen Winkeln gesehen. Gerade bei großen Behältern 26, wie einer Palette, und Objekt-Transpondern 22 an deren Rand verbessert diese Unterscheidung, ob sich der Objekt-Transponder 22 noch am äußeren Rand des einen Behälters 26 oder bereits des benachbarten Behälters 26 befindet.

## Patentansprüche

1. RFID-Vorrichtung (10) zum Kommunizieren mit RFID-Transpondern (12, 22, 24) gemäß einem RFID-Protokoll, die eine Antenne (14), einen RFID-Transceiver (16) zum Abstrahlen und Empfangen von RFID-Signalen mit Hilfe der Antenne (14) und eine Steuerungseinheit (18) aufweist, die dafür ausgebildet ist, gemäß dem RFID-Protokoll eine RFID-Information in ein RFID-Signal zu codieren oder aus dem RFID-Signal auszulesen,
**dadurch gekennzeichnet,**
**dass** die Steuerungseinheit (18) weiter dafür ausgebildet ist, Behälter-Transponder (24) und Objekt-Transponder (22) auszulesen, dabei zusätzlich aus Eigenschaften der Trägerwelle des jeweils empfangenen RFID-Signals mindestens eine Orts- und/oder Geschwindigkeitsgröße zu erfassen und einen Objekt-Transponder (22) anhand der ausgelesenen RFID-Information und der jeweiligen Orts- und/oder Geschwindigkeitsgrößen einem Behälter-Transponder (24) zuzuordnen.

2. RFI D-Vorrichtung (10) nach Anspruch 1,
wobei die Steuerungseinheit (18) dafür ausgebildet ist, als Ortsgröße den Winkel zu bestimmen, in dem ein RFID-Transponder (12, 22, 24) erfasst wird.

3. RFI D-Vorrichtung (10) nach Anspruch 1 oder 2,
wobei die Steuerungseinheit (18) dafür ausgebildet ist, als Ortsgröße den Abstand zu bestimmen, in dem ein RFID-Transponder (12, 22, 24) erfasst wird.

4. RFID-Vorrichtung (10) nach einem der vorhergehenden Ansprüche,
wobei die Steuerungseinheit (18) dafür ausgebildet ist, einem Behälter-Transponder (24) als Mittelpunkt alle Objekt-Transponder (22) in einem Höchstabstand zuzuordnen.

5. RFID-Vorrichtung (10) nach einem der vorhergehenden Ansprüche,
wobei die Steuerungseinheit (18) dafür ausgebildet ist, einem Behälter-Transponder (24) alle Objekt-Transponder (22) mit ähnlicher Geschwindigkeit zuzuordnen.

6. RFID-Vorrichtung (10) nach einem der vorhergehenden Ansprüche,
wobei die Steuerungseinheit (18) dafür ausgebildet ist, eine äußere Grenze anhand mindestens zweier Behälter-Transponder (24a-b) zu ziehen und den Behälter-Transpondern (24a-b) alle dazwischen angeordneten Objekt-Transponder (22) zuzuordnen.

7. RFID-Vorrichtung (10) nach einem der vorhergehenden Ansprüche,
wobei die Steuerungseinheit (18) dafür ausgebildet ist, Behälter-Transponder (24) untereinander durch Vergleich von Orts- und/oder Geschwindigkeitsgrößen zuzuordnen.

8. RFID-Vorrichtung (10) nach einem der vorhergehenden Ansprüche,
wobei die Steuerungseinheit (18) dafür ausgebildet ist, Orts- und/oder Geschwindigkeitsgrößen zu mindestens zwei Zeitpunkten zu bestimmen und die Zuordnung darauf zu stützen.

9. RFID-Vorrichtung (10) nach einem der vorhergehenden Ansprüche,
wobei die Steuerungseinheit (18) dafür ausgebildet ist zu erkennen, wenn bei einer wiederholten Zuordnung von Objekt-Transponder (22) zu Behälter-Transponder (24) eine veränderte Zuordnung eintritt.

10. RFID-Vorrichtung (10) nach einem der vorhergehenden Ansprüche,
wobei die Steuerungseinheit (18) dafür ausgebildet ist, eine Zwangsführung (28) der RFID-Transponder (12, 22, 24) bei der Bestimmung der Orts- und/oder Geschwindigkeitsgrößen und bei der Zuordnung zu berücksichtigen.

11. Verfahren zum Zuordnen von RFID-Transpondern (12, 22, 24), wobei mit den RFID-Transpondern (12, 22, 24) gemäß einem RFID-Protokoll kommuniziert wird, indem ein RFID-Signal abgestrahlt und empfangen und gemäß dem RFID-Protokoll eine RFID-Information in das RFID-Signal codiert oder aus dem RFID-Signal ausgelesen wird,
**dadurch gekennzeichnet,**
**dass** Behälter-Transponder (24) und Objekt-Transponder (22) ausgelesen, dabei zusätzlich aus Eigenschaften der Trägerwelle des jeweils empfangenen RFID-Signals mindestens eine Orts- und/oder Geschwindigkeitsgröße erfasst und ein Objekt-Transponder (22) anhand der ausgelesenen RFID-Information und der jeweiligen Orts- und/oder Geschwindigkeitsgrößen einem Behälter-Transponder (24) zugeordnet wird.

## Claims

1. An RFID apparatus (10) for communicating with RFID transponders (12, 22, 24) in accordance with an RFID protocol, comprising an antenna (14), an RFID transceiver (16) for emitting and receiving RFID signals with the aid of the antenna (14), and a control unit (18) that is configured to encode RFID information into an RFID signal or to read said information from the RFID signal in accordance with the RFID protocol,
**characterized in that** the control unit (18) is further configured to read container transponders (24) and object transponders (22), to additionally detect at least one spatial and/or speed parameter from properties of the carrier wave of the respective received RFID signal, and to associate an object transponder (22) with a container transponder (24) with reference to the read RFID information and the respective spatial and/or speed parameters.

2. The RFID apparatus (10) in accordance with claim 1,
wherein the control unit (18) is configured to determine the angle at which an RFID transponder (12, 22, 24) is detected as the spatial parameter.

3. The RFID apparatus (10) in accordance with claim 1 or 2,
wherein the control unit (18) is configured to determine the spacing at which an RFID transponder (12, 22, 24) is detected as the spatial parameter.

4. The RFID apparatus (10) in accordance with any of the preceding claims, wherein the control unit (18) is configured to associate all the object transponders (22) at a maximum spacing with a container transponder (24) as the center.

5. The RFID apparatus (10) in accordance with any of the preceding claims, wherein the control unit (18) is configured to associate all the object transponders (22) with a container transponder (24) having a similar speed.

6. The RFID apparatus (10 in accordance with any of the preceding claims, wherein the control unit (18) is configured to draw an outer border with reference to at least two container transponders (24a-b) and to associate all the object transponders (22) arranged therebetween with the container transponders (24a-b).

7. The RFID apparatus (10) in accordance with any of the preceding claims, wherein the control unit (18) is configured to associate container transponders (24) with one another by a comparison of spatial and/or speed parameters.

8. The RFID apparatus (10) in accordance with any of the preceding claims, wherein the control unit (18) is configured to determine spatial and/or speed parameters at at least two points in time and to base the association thereon.

9. The RFID apparatus (10) in accordance with any of the preceding claims, wherein the control unit (18) is configured to recognize when a changed association occurs on a repeated association of object transponder (22) to container transponder (24).

10. The RFID apparatus (10) in accordance with any of the preceding claims, wherein the control unit (18) is configured to take account of a compulsory guidance (28) of the RFID transponders (12, 22, 24) during the determination of the spatial and/or speed parameters and during the association.

11. A method of associating RFID transponders (12, 22, 24), wherein communication with the RFID transponders (12, 22, 24) takes place in accordance with an RFID protocol in that an RFID signal is emitted and received and RFID information is encoded into the RFID signal or is read from the RFID signal in accordance with the RFID protocol, **characterized in that** container transponders (24) and object transponders (22) are read out, at least one spatial and/or speed parameter is detected from properties of the carrier wave of the respective received RFID signal, and an object transponder (22) is associated with a container transponder (24) with reference to the read RFID information and the respective spatial and/or speed parameters.

## Revendications

1. Dispositif RFID (10) pour communiquer avec des transpondeurs RFID (12, 22, 24) selon un protocole RFID, qui comprend une antenne (14), un émetteur-récepteur RFID (16) pour émettre et recevoir des signaux RFID à l'aide de l'antenne (14), et une unité de commande (18) réalisée pour coder une information RFID en un signal RFID ou pour la lire dans le signal RFID, selon le protocole RFID,
**caractérisé en ce que**
l'unité de commande (18) est en outre réalisée pour lire des transpondeurs de conteneur (24) et des transpondeurs d'objet (22), pour détecter en supplément au moins une grandeur de localité et/ou de vitesse à partir des propriétés de l'onde porteuse du signal RFID respectif reçu et pour associer un transpondeur d'objet (22) à un transpondeur de conteneur (24) en se basant sur l'information RFID lue et sur les grandeurs de localité et/ou de vitesse respectives.

2. Dispositif RFID (10) selon la revendication 1,
dans lequel l'unité de commande (18) est réalisée pour déterminer en tant que grandeur de localité l'angle sous lequel un transpondeur RFID (12, 22, 24) est détecté.

3. Dispositif RFID (10) selon la revendication 1 ou 2,
dans lequel l'unité de commande (18) est réalisée pour déterminer en tant que grandeur de localité la distance à laquelle un transpondeur RFID (12, 22, 24) est détecté.

4. Dispositif RFID (10) selon l'une des revendications précédentes, dans lequel l'unité de commande (18) est réalisée pour associer à un transpondeur de conteneur (24) tous les transpondeurs d'objet (22) à une distance maximale en tant que centre.

5. Dispositif RFID (10) selon l'une des revendications précédentes, dans lequel l'unité de commande (18) est réalisée pour associer à un transpondeur de conteneur (24) tous les transpondeurs d'objet (22) ayant une vitesse similaire.

6. Dispositif RFID (10) selon l'une des revendications précédentes, dans lequel l'unité de commande (18) est réalisée pour tracer une limite extérieure en se basant sur au moins deux transpondeurs de conteneur (24a - b) et pour associer aux transpondeurs de conteneur (24a - b) tous les transpondeurs d'objet (22) disposés entre ceux-ci.

7. Dispositif RFID (10) selon l'une des revendications précédentes, dans lequel l'unité de commande (18) est réalisée pour associer des transpondeurs de conteneur (24) entre eux par comparaison des grandeurs de localité et/ou de vitesse.

8. Dispositif RFID (10) selon l'une des revendications précédentes, dans lequel l'unité de commande (18) est réalisée pour déterminer des grandeurs de localité et/ou de vitesse à au moins deux instants et pour y baser l'association.

9. Dispositif RFID (10) selon l'une des revendications précédentes, dans lequel l'unité de commande (18) est réalisée pour reconnaître si une association modifiée se produit lors d'une association répétée de transpondeurs d'objet (22) à des transpondeurs de conteneur (24).

10. Dispositif RFID (10) selon l'une des revendications précédentes,
dans lequel l'unité de commande (18) est réalisée pour prendre en compte un guidage forcé (28) des transpondeurs RFID (12, 22, 24) lors de la détermination des grandeurs de localité et/ou de vitesse et lors de l'association.

11. Procédé d'association de transpondeurs RFID (12, 22, 24), dans lequel les transpondeurs RFID (12, 22, 24) communiquent selon un protocole RFID du fait qu'un signal RFID est émis et reçu et une information RFID est codée en le signal RFID ou est lue dans le signal RFID, selon le protocole RFID,
**caractérisé en ce que**
des transpondeurs de conteneur (24) et des transpondeurs d'objet (22) sont lus, et en supplément au moins une grandeur de localité et/ou de vitesse est détectée à partir des propriétés de l'onde porteuse du signal RFID respectif reçu, et un transpondeur d'objet (22) est associé à un transpondeur de conteneur (24) en se basant sur l'information RFID lue et sur les grandeurs de localité et/ou de vitesse respectives.
